# EUROPÄISCHE PATENTANMELDUNG

(11) **EP 4 030 511 A1**
(43) Veröffentlichungstag der Anmeldung: **20.07.2022**
(21) Anmeldenummer: 21151795.8
(22) Anmeldetag: 15.01.2021
(51) Int. Cl.: H01M 4/86, C25B 1/04, C25B 11/031, C25B 11/061, C25B 11/077, H01M 4/88, H01M 8/1018

(54) **HERSTELLUNGSMETHODE EINER KATALYSATORBESCHICHTETEN DREIDIMENSIONAL STRUKTURIERTEN ELEKTRODE**

(71) Anmelder: Technische Universität Berlin, 10623 Berlin (DE)
(72) Erfinder: Bernsmeier, Denis, 10709 Berlin (DE); Krähnert, Ralph, 13469 Berlin (DE); Bernicke, Michael, 10245 Berlin (DE)
(74) Vertreter: Hertin und Partner Rechts- und Patentanwälte PartG mbB

(57) **Zusammenfassung**

Die Erfindung betrifft ein Verfahren zur Herstellung einer katalysatorbeschichteten dreidimensional strukturierten Elektrode. Eine mesoporöse Katalysatorschicht wird dabei auf ein dreidimensional strukturiertes Metallsubstrat synthetisiert, indem zunächst eine Suspension aus einem Templat, einem Metall-Präkursor und einem Lösungsmittel generiert und auf das dreidimensional strukturierte Metallsubstrat aufgetragen wird. Danach wird das dreidimensional strukturierte Metallsubstrat getrocknet, sodass das Lösungsmittel innerhalb des Suspensionsfilms verdampft und eine Schicht einer Katalysatorvorstufe mit integrierten Templatstrukturen erhalten wird. Abschließend wird das Katalysatorvorstufen umfassenden dreidimensional strukturierte Metallsubstrats einer thermischen Behandlung unterzogen, sodass eine mesoporöse Katalysatorschicht entsteht.

Darüber hinaus betrifft die Erfindung Elektrode, welche durch das Verfahren eingangs genannter Art hergestellt wurde, sowie eine Elektrochemische Zelle mit einer solchen Elektrode.

## Beschreibung

Die Erfindung betrifft ein Verfahren zur Herstellung einer katalysatorbeschichteten dreidimensional strukturierten Elektrode. In einem ersten Verfahrensschritt wird ein dreidimensional strukturiertes Metallsubstrat bereitgestellt. Anschließend wird eine mesoporöse Katalysatorschicht auf das dreidimensional strukturierte Metallsubstrat synthetisiert. Die Synthese erfolgt bevorzugt indem zunächst eine Suspension aus einem Templat, einem Metall-Präkursor und einem Lösungsmittel generiert wird. Anschließend wird die Suspension auf das dreidimensional strukturierte Metallsubstrat aufgetragen, sodass sich ein Suspensionsfilm auf dem dreidimensional strukturierte Metallsubstrat bildet. Danach wird das dreidimensional strukturierte Metallsubstrat bei einer Temperatur T₁ getrocknet, sodass das Lösungsmittel innerhalb des Suspensionsfilms verdampft und eine Schicht einer Katalysatorvorstufe mit integrierten Templatstrukturen erhalten wird. Abschließend wird das Katalysatorvorstufen umfassenden dreidimensional strukturierte Metallsubstrats einer thermischen Behandlung unterzogen, sodass eine mesoporöse Katalysatorschicht entsteht.

Darüber hinaus betrifft die Erfindung Elektrode, welche durch das Verfahren eingangs genannter Art hergestellt wurde, sowie eine Elektrochemische Zelle mit einer solchen Elektrode.

### Hintergrund und Stand der Technik

In Elektrolysezellen für die Wasserspaltung sowie Brennstoffzellen zur Rückverstromung gasförmigen Wasserstoffs, werden üblicherweise mit einem Binder dispergierte Katalysatorpulver auf eine Membran mittels Sprüh-, Siebdruck-, oder Rakelverfahren aufgetragen. Derartige Verfahren sind bspw. aus den Druckschriften DE19544323A1 und US20120094210A1 bekannt.

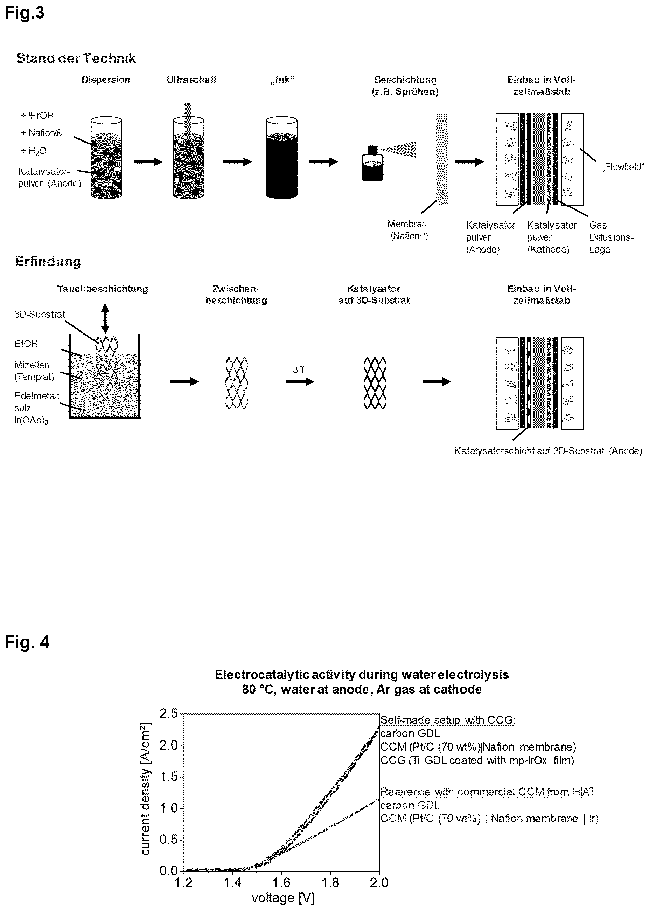

Bei der Herstellung einer Katalysatorschicht mit den oben genannten Techniken gelingt es nicht, eine gleichmäßige Beschichtung mit einstellbarer Porosität und ohne den Einsatz eines Binders zu realisieren. Dabei zeigen im Halbzellmaßstab insbesondere binderfreie und mesoporös templatierte Anodenmaterialien verbesserte Aktivitäten in der Sauerstoffevolution (OER). Es hat sich gezeigt, dass Iridiumhaltige mesoporöse Schichten eine deutlich höhere Ir-Massenaktivität als vergleichbare binderbasierte und über Ink-Methoden hergestellte Katalysatorschichten erreichen(vgl. auch Fig. 4).

Eine direkte Beschichtung der Membran mit einem binderfreien mesoporös templatierten Katalysator ist nicht möglich, da die Synthese eines solchen Katalysators (ohne Binder) eine thermische Behandlung erfordert. Die thermische Behandlung führt zur Zerstörung der Membran.

Um dennoch die hochaktiven Katalysatorschichten in einen Elektrolyseur oder eine Brennstoffzellen einzusetzen, musste daher eine alternative Methode gefunden werden, die eine Überführung der mesoporösen Schicht aus dem Halb- in den Vollzellmaßstab ermöglicht.

### Aufgabe der Erfindung

Die Aufgabe der Erfindung war es daher die Nachteile aus dem Stand der Technik zu beseitigen und eine elektrochemische Zelle bereitzustellen, welche eine hochaktive binderfreie mesoporös templatierten Katalysatorschicht umfasst. Insbesondere war die Aufgabe der Erfindung eine Elektrode für eine derartige elektrochemische Zelle und ein Verfahren zur Herstellung dieser Elektrode bereitzustellen.

### Zusammenfassung der Erfindung

Die erfindungsgemäße Aufgabe wird gelöst durch die Merkmale der unabhängigen Ansprüche. Vorteilhafte Ausgestaltungen der Erfindung sind in den abhängigen Ansprüchen beschrieben.

In einer bevorzugten Ausführungsform betrifft die Erfindung ein Verfahren zur Herstellung einer katalysatorbeschichteten dreidimensional strukturierten Elektrode umfassend die nachfolgenden Schritte:
a) Bereitstellung eines dreidimensional strukturierten Metallsubstrats;
b) Herstellung einer Suspension umfassend ein Templat, einen Metall-Präkursor und ein Lösungsmittel;
c) Auftragen der Suspension auf das dreidimensional strukturierte Metallsubstrat, sodass sich ein Suspensionsfilm auf dem dreidimensional strukturierte Metallsubstrat bildet;
d) Trocknen des Suspensionsfilms auf dem dreidimensional strukturierten Metallsubstrat bei einer Temperatur T₁, sodass das Lösungsmittel innerhalb des Suspensionsfilms verdampft und eine Schicht einer Katalysatorvorstufe mit integrierten Templatstrukturen erhalten wird;
e) thermische Behandlung des Katalysatorvorstufen umfassenden dreidimensional strukturierte Metallsubstrats bei einer zweiten Temperatur T₂, und einer Kalzinierzeit t₂, sodass eine mesoporöse Katalysatorschicht entsteht.

Das erfindungsgemäße Verfahren gestaltet sich als eine Abkehr vom Stand der Technik, denn Katalysatoren werden nicht -wie häufig angewendet- über eine binderbasierte Dispersion mittels geeignetem Verfahren (Sprühen, Pinseln, Siebdrucken, Rakeln) auf ein Substrat aufgetragen, sondern binderfrei und mit definierter Porenstrukturen auf einem dreidimensionales Substrat abgeschieden (Tauchbeschichtung) und anschließend in einem Vollzellmaßstab implementiert. Der Verzicht eines Binders führt dabei vorteilhaft zu keiner Verringerung der volumenbezogenen elektrischen Leitfähigkeit des katalytisch aktiven Materials - entgegen der bekannten Binder umfassenden Katalysatoren aus dem Stand der Technik. Demnach wird mit dem erfindungsgemäßen Verfahren eine höhere Katalysatoreffizienz erhalten. Darüber hinaus führen dicht gepackte Porenstrukturen zu einer rissfreien Beschichtung und im Falle kleiner Mesoporen, zum bestmöglichsten Mittelweg aus Oberfläche und Zugänglichkeit von Edukten und Produkten unter Vermeidung von Diffusionslimitierungen

Es hat sich gezeigt, dass der Einsatz dreidimensional strukturierter Elektroden wesentliche Vorteile in verschieden Anwendungsfällen, insbesondere in der Anwendung innerhalb von elektrochemischen Zellen, mit sich bringt. Dreidimensional strukturierte Elektroden weisen eine besonders große spezifische Oberfläche pro Volumeneinheit auf, welche somit eine verbesserte Interaktion der Elektrode mit einem ihr umgebenen Medium ermöglicht. Ein Verfahren zur Herstellung einer dreidimensional strukturierten Elektrode mit einer nanostrukturierten mesoporös templatierten Katalysatorschicht war aus dem Stand der Technik bisher weder bekannt noch nahegelegt.

Wie schon eingangs erörtert liegt ein wesentlicher Vorteil der vorliegenden Erfindung in der binderfreien Herstellung eines Katalysators. Binder sind üblicherweise notwendig, um eine mechanische Haftung der Partikel eines Katalysatorpulvers sowohl zueinander als auch zu einem Substrat zu gewährleisten. Das erfindungsgemäße Verfahren führt zu kovalent gebundenen Netzwerken des Katalysators, wodurch -binderfrei- ein ausreichender innerer struktureller Zusammenhalt erzeugt wird. Ein wesentlicher Nachteil des Binders besteht in der Herabsetzung der Elektronenleitfähigkeit, wodurch die katalytische Effizienz aktiver Zentren merklich reduziert wird. Ein weiterer Nachteil des Binders ist die Blockierung aktiver Zentren.

Im Sinne der Erfindung ist ein dreidimensional strukturiertes Substrat bevorzugt in der Form ausgestaltet, dass es eine räumliche Struktur, also eine Ausdehnung in jede Raumrichtung, annimmt. Unter der Begriffsfolge ist bevorzugt eine dreidimensionale, d.h. räumliche, Anordnung von Strukturelementen innerhalb (oder auch auf der Oberfläche) eines Substrats zu verstehen. Die Geometrie einer dreidimensionalen Strukturierung zielt vorteilhaft darauf ab, eine erhöhte Oberfläche pro Substratvolumen zu ermöglichen. Dies kann beispielsweise durch regelmäßige Poren, Erhebungen, Vertiefungen, Öffnungen in einem dreidimensionalen Substrat erfolgen. Eine erhöhte Oberfläche führt vorteilhaft zu einer verbesserten Interaktion des Substrats mit seinem umgebenden Medium.

Das dreidimensional strukturierte Metallsubstrat wird bevorzugt in einem dem Verfahren vorgelagerten Schritt gereinigt bzw. vorbehandelt. Insbesondere kann eine derartige Vorbehandlung durch Ätzung bewerkstelligt werden. Dies führt zu einer verbesserten Haftung der später aufgetragenen mesoporösen Katalysatorschicht, da vorteilhaft nicht-gewünschte Oxide und Schmutz entfernt wird. Es versteht sich, dass die Vorbehandlung auch durch weitere Verfahren zur Entfernung von Oxiden und Schmutz erfolgen kann.

Die Kombination der vorliegenden Verfahrensschritte führt zu einem überraschenden Synergieeffekt, der zu den vorteilhaften Eigenschaften und dem damit einhergehenden Gesamterfolg der Erfindung führt, wobei die einzelnen Merkmale in Wechselwirkung zueinander stehen. Ein wichtiger Vorteil des erfindungsgemäßen Verfahrens ist zudem die überaus schnelle, reproduzierbare und wirtschaftliche Syntheseprozedur.

Die Verwendung eines dreidimensional strukturierten Metall-Substrats war für einen Fachmann fernliegend. Aufgrund der thermischen Behandlung innerhalb der Syntheseprozedur, war davon auszugehen, dass das dreidimensional strukturierte Metall-Substrat einen Verzug erleidet. Weiterhin war zu erwarten, dass eine thermische Behandlung des dreidimensionalen Metallsubstrats zu nachteiligen Eigenspannungen und unter Umständen zu Rissen innerhalb des Materials führt. Insbesondere Gitterstrukturen, Netze etc. weisen dünne Maschen auf, die keinen hohen Temperaturen standhalten.

Daher war es für die Erfinder überraschend, dass der Einfluss der aufgetragenen Suspension ein derartiges Materialverhalten im großen Maße verhindert. Es war nicht zu erwarten, dass die aufgetragene Suspension/Katalysatorvorstufe neben den (später -nach der thermischen Behandlung- erhaltenen) vorteilhaften Eigenschaften als hochaktiver Katalysator in elektrochemischen Zellen auch eine Schutzwirkung auf die Elektrode im Zusammenhang mit einer thermischen Behandlung aufweist.

Es hat sich zudem vorteilhaft gezeigt, dass die Suspension an sämtlichen geometrischen Formen (Fortsätzen, Hinterschneidungen, Rundungen, Erhebungen etc.) des strukturierten dreidimensionalen Substrats homogen und gleichmäßig nach dem Auftragen, bevorzugt einer Tauchbeschichtung, vorliegt. Insbesondere im Vergleich mit einem Substrat, welches eine durchgängig planar ausgestaltet Fläche aufweist, führt das dreidimensional strukturierte Substrat zu einer verbesserten Haftung der Suspension.

Überraschend war, dass beim Tauchbeschichten das Auftreten sogenannter Randeffekte nicht besonders ausgeprägt war. Obwohl bekannt ist, dass Randeffekte zu dickeren Filmsegmenten führen können, gelingt bei Einstellung der richtigen Zusammensetzung Beschichtungen mit homogener Schichtdicke zu erhalten.

Es hat sich als vorteilhaft gezeigt, dass die über Tauchbeschichtung hergestellten mesoporösen Beschichtungen besonders gut auf dem Substrat hält. Testungen der Haftung via Tapetest zeigten, dass sie das Schichtmaterial schlecht vom Substrat ablösen lässt. Im Vergleich zeigen beispielsweise besprühte Substrate, die unter den gleichen Bedingungen thermisch behandelt wurden, eine deutlich schlechtere Haftung. Dies kann mit der gleichmäßigen Filmmorphologie erklärt werden. Auch mehrlagige Beschichtungen zeigten eine gute Haftung. Ein weiterer Vorteil ist die Möglichkeit, dass die mesoporösen Beschichtungen sich gut in mehreren Lagen aufbringen lassen. Somit kann beispielsweise bei der Tauchbeschichtung eine gewünschte geometrische Metallbeladung in einem breiten Bereich gezielt eingestellt werden. Die mesoporöse Morphologie hilft dabei eine hohe geometrische Beladung zu erreichen, da die poröse Struktur Verspannungen innerhalb der Schicht besser kompensieren kann. Während der Kalzinierung / der Entfernung des Templates schrumpft der Film entlang der Flächennormalen (es entstehen ellipsoide Poren), dabei werden Spannungen innerhalb des Schicht kompensiert, die zu einem Ablösen der Schicht führen könnten.

Insbesondere der Einsatz eines Metallsubstrats ist vorteilhaft dazu geeignet, geometrisch eine dreidimensional strukturierten Form anzunehmen, wobei das Substrat aufgrund des Werkstoffes (Metall) weiterhin eine ausreichend hohe Steifigkeit aufweist. Dies ermöglicht eine stabile Ausgestaltung eines Substrats, welches Zug und Druckbelastungen standhalten kann und somit für den Einbau in einen Vollzellmaßstab besonders simpel ohne Schäden geeignet ist. Darüber hinaus ist Metall sehr gut bearbeitbar, sodass sämtliche geometrische Formen durch das Metallsubstrat angenommen werden können.

In einer bevorzugten Ausführungsform umfasst das Metallsubstrat ein Metall ausgesucht aus der Gruppe umfassend: Nickel, Silber, Titan, Eisen, Mangan, Kobalt, Gold, Iridium, Kupfer, Platin, Palladium, Osmium, Rhodium, Ruthenium, Aluminium sowie deren Legierungen. Die vorgenannten Materialien sind vorteilhaft, weil diese im Allgemeinen eine gute elektrische Leitfähigkeit, zugleich aber auch durch eine gute chemische Stabilität gegenüber einen umgebenen Medium, insbesondere im Einsatz von Elektrolysezellen oder Galvanischen Zellen, aufweisen. Es versteht sich, dass das Metallsubstrat auch Kombinationen vorgenannter Materialien umfasst.

In einer bevorzugten Ausführungsform ist das Verfahren dadurch gekennzeichnet, dass mesoporöse Katalysatorschichten auf dreidimensional strukturierten Ti-Substraten mit unterschiedlicher Geometrie hergestellt werden. Gerade Ti-Substrate sind bevorzugt geeignet, da sie über eine natürliche dünne Oxidschicht auf der Oberfläche verfügen. Beschichtet man nun diese Substrate, können auf der Substratoberfläche vorhandene Sauerstofffunktionen während der thermischen Behandlung eine kovalente und/oder ionische Bindungen mit der Katalysatorschicht eingehen, wodurch starke mechanische Haftung resultiert.

In einer bevorzugten Ausführungsform umfasst das Metallsubstrat auch weitere elektrisch leitfähigen Materialien ausgesucht aus der Gruppe umfassend Glaskohlenstoff, Bor-dotierter-Diamant, Carbide, Nitride, Oxide. Diese liegen bevorzugt in kleineren Mengen im Metallsubstrat vor, wobei kleinere Mengen ein Bereich von bevorzugt kleiner Volumenprozent des Gesamtsubstrats beschreibt.

Bevorzugt ist die synthetisierte mesoporöse Katalysatorschicht nanostrukturiert. Unter einer Nanostrukturierung ist bevorzugt die Strukturierung eines Festkörpers auf atomarem Niveau zu verstehen. Durch gezielte Modifikation (Implantation) werden atomare, chemische usw. meist oberflächennahe Festkörpereigenschaften verändert.

Eine nanostrukturierte mesoporöse Katalysatorschicht ist bevorzugt als eine geordnete Nanostruktur der mesoporösen Katalysatorschicht zu verstehen. Das bedeutet, dass einer Katalysatorschicht wiederholend (periodisch) in gleicher Weise in etwa gleiche Strukturelemente umfasst sind (bspw. aneinandergereiht). Es hat sich überraschend gezeigt, dass die Ausbildung einer geordneten Mesostruktur durch die geometrische Ausgestaltung (bspw. Wölbung, Vertiefung) der Substratoberfläche nicht gestört wird.

Weiterhin bevorzugt wird ein Metallsalz als Katalysatorvorstufe zusammen mit einem Templat in einem geeigneten Lösungsmittel dispergiert und diese Mischung auf das dreidimensionale Metallsubstrat überführt. Das nachfolgende Verdampfen des Lösungsmittels führt zu einer vorteilhaften periodischen Anordnung des Templats umgeben von einer Katalysatorvorstufe. Eine anschließende thermische Behandlung bei bevorzugten Temperaturen zwischen 300 °C - 800 °C verbrennt das Templat und überführt die Vorstufe in den eigentlichen Katalysator, bevorzugt ein Metalloxid. Durch die Entfernung des Templats entstehen Poren, die miteinander verknüpft sind und besonders vorteilhaft eine hohe Oberfläche für katalytische Prozesse zur Verfügung stellen.

Der bevorzugte Syntheseansatz basiert auf Templaten die als Platzhalter für ein gewünschtes Porengefüge dienen. Während der Synthese wird das Templat vom umgebenden Material (Katalysatorvorstufe) eingeschlossen und hinterlassen nach ihrer Entfernung ein definiert poröses Material. Abhängig von der Templatgröße entstehen Porenstrukturen mit Porengrößen von einigen Mikrometern bis zu wenigen Nanometern. Materialien mit einer geordneten Porenstruktur und einer monomodalen Porengrößenverteilung können demnach bevorzugt über sogenannte Templatierungsverfahren synthetisiert werden. Bei diesem Syntheseansatz dienen Template als Platzhalter für die gewünschte Porenform.

In weiteren bevorzugten Ausführungsformen umfasst das Templat bevorzugt Tenside, Block-Copolymere und/oder dendritische Kern-Schalenpolymere. Das Templat führt zu vorteilhaften mesoporösen Strukturierungen innerhalb der Katalysatorschicht, wobei das Templat Mizellen bilden oder aber auch andere Strukturierungen aufweisen kann. Das Templat kann in weiteren Alternativen auch ein nicht Mizellen bildendes Kern-Schale-Makromolekül, gewissermaßen eine unimolekulare Mizelle, umfassen. Weiterhin können Block-Copolymere auch lamellare Strukturen annehmen.

In einer bevorzugten Ausführungsform sind Template als Softtemplate ausgestaltet. Softtemplate sind verformbare strukturdirigierende Einheiten. Dies können Mizellen oder lamellare Strukturen aus amphiphilen Polymeren (oftmals Block-Copolymere) sein. Typischerweise entstehen die Mizellen oder Lamellen oberhalb einer kritischen Konzentration eines in einem Lösungsmittel dispergierten Polymers. Zu den Softtemplaten gehören auch dendritische oder hyperverzweigte Kern-Schalenpolymere, wobei Kern und Schale der Polymere unterschiedliche Hydrophilizitäten zeigen, somit auch amphiphil sind.

In einer weiteren bevorzugten Ausführungsform sind Template als Hardtemplate ausgestaltet. Hardtemplate sind starre sturkturdirigierende Einheiten. Zu nanostrukturierte Hardtemplaten zählen Metalle, Oxide, oftmals Siliziumoxide (z.B. MCM-Gruppe, SBA-Gruppe, FDU-Gruppe, KIT-Gruppe, MSU-Gruppe, TUD-Gruppe, HMM-Gruppe, FSM-Gruppe) sowie Kohlenstoffe (z.B. CMK-Gruppe). Es kann sich bei diesen Hardtemplaten um einzelne Nanopartikel oder um nanostrukturierte größere Gebilde handeln.

Der bevorzugte Verfahrensschritt der Trocknung kann in einer bevorzugten Variante auch so ausgestaltet sein, dass die Trocknung in sehr kurzer Zeit erfolgt. Zum Beispiel in einem Zeitbereich vom Auftragen der Suspension auf das Metallsubstrat bis hin zur thermischen Behandlung. In der Praxis kann sich der Zeitbereich bspw. folgendermaßen ereignen: Herausziehen des dreidimensionalen Metallsubstrats aus einem Behältnis umfassend der Suspension und direktes Einlegen in einen Ofen zur thermischen Behandlung. Ein derartige Durchführen des Trocknungsvorgangs führt einer besonders schnell durchführbaren Synthese der Katalysatorschicht auf das dimensional strukturierte Metall-Substrat.

In einer weiteren bevorzugten Ausführungsform ist das Verfahren dadurch gekennzeichnet, dass das Auftragen der Suspension aus Schritt (c) anhand einer Tauchbeschichtung erfolgt. Es war überraschend, dass eine Tauchbeschichtung eine homogene gleichmäßige Katalysatorschicht ermöglicht. Ein weiterer Vorteil einer Tauchbeschichtung ist der, dass insbesondere auch Hinterschneidungen eines dreidimensional strukturierten Metallsubstrats in einfacher Weise beschichtet werden können.

Mit der Tauchbeschichtung gehen noch weitere Vorteile einher. Es lassen sich zum Beispiel gleichzeitig mehrere dreidimensional strukturierten Metallsubstrate beschichten, was eine besonders wirtschaftliche Produktion ermöglicht. Weiterhin weist eine Tauchbeschichtung eine vorteilhaft sehr kurze Prozesszeit auf, denn ein kurzes Eintauchen in die Suspension ist vorteilhaft schon ausreichend um eine bevorzugte Katalysatorschicht zu erhalten. Darüber hinaus ist eine Tauchbeschichtung sehr ressourcenschonend, da keine Materialverschwendung stattfindet (Suspension ist in einem Behälter).

In einer bevorzugten Ausführungsform ist das Verfahren dadurch gekennzeichnet, dass das dreidimensional strukturierte Metallsubstrat als ein Netz, Schaum, Gitter, Sieb, Gewebe und/oder Geflecht ausgestaltet ist.

Besonders bevorzugt ist dreidimensional strukturierte Metallsubstrat in Form eines Netzes oder eines Gitters ausgeführt. Die bevorzugten und besonders bevorzugten Ausführungsformen als Netz oder Gitter sind vorteilhaft, weil solche Ausführungsformen einfach aus den oben beschriebenen Materialien bezogen werden können. Ferner führen derartige Ausgestaltungen vorteilhaft dazu, dass die Metallsubstrate in simpler Weise verformt werden können.

In einer bevorzugten Ausführungsform ist das Verfahren dadurch gekennzeichnet, dass die Temperatur T₂ in einem Bereich liegt zwischen 200°C und 1000°C, bevorzugt zwischen 300°C und 800°C, und die Kalzinierzeit t₂ in einem Bereich liegt zwischen 1 Minute und 1440 Minuten, insbesondere zwischen 10 Minuten bis 60 Minuten. Gerade innerhalb der beschriebenen Parameter kann das Templat vorteilhaft vollständig verbrennen, sodass eine nanostrukturierte mesopröose Katalysatorschicht erhalten wird.

In einer weiteren bevorzugten Ausführungsform kann das Templat auch aus der Katalysatorvorstufe mit einem geeigneten Medium herausgelöst/herausgeschwemmt werden. Es versteht sich, dass, auch eine Kombination aus Wärmebehandlung und Herauslösen der Template über ein Medium nacheinander erfolgen kann. Sofern Template über ein Medium herausgelöst werden - ohne zu verbrennen- können diese Templatstrukturen bevorzugt weiter verarbeitet und/oder wiederverwendet werden.

Um das Templat thermisch zu zersetzten und die anorganische Spezies in ein kristallines Metalloxid umzuwandeln, wird die Katalysatorvorstufe bevorzugt kalziniert.

Die Kalzinierung führt zu einem drastischen Volumenverlust der Schicht, verursacht durch die Verbrennung des Templats und der Umwandlung der amorphen Porenwand zu einem kristallinen Material. Da die Haftung der Schicht auf dem Substrat vergleichsweise stark ist, u.a. durch kovalente Bindungen zwischen der Substratoberfläche und der Metalloxid-Spezies, kommt es zu einer Kontraktion der Schicht ausschließlich senkrecht zum Substrat, ohne dass die Schicht reißt.

Alle in diesem Dokument offenbarten Parameterbereiche, wie bspw. Temperaturen, Kräfte, Drücke, Abstände etc., umfassen selbstverständlich alle Werte innerhalb der angegebenen Bereiche sowie deren maximalen und minimalen Grenzwerte. Es ist für einen Fachmann ersichtlich, dass die Werte auch gewissen Schwankungen unterliegen. Im vorliegenden Fall handelt sich demnach um einen Temperaturbereich von etwa 200°C bis 1000°C, und bevorzugt etwa 300°C bis 800°C und einer Kalzinierzeit von bevorzugt etwa 1 Minute bis 1440 Minuten, insbesondere etwa 10 bis 60 Minuten. Dies lässt sich auch auf alle weiteren Parameterbereiche des Dokumentes analog übertragen.

Begriffe wie "im Wesentlichen", "ungefähr", "etwa", "ca." etc. beschreiben bevorzugt einen Toleranzbereich von weniger als ± 40%, bevorzugt weniger als ± 20%, besonders bevorzugt weniger als ± 10 %, noch stärker bevorzugt weniger als ± 5% und insbesondere weniger als ± 1% und umfassen stets den exakten Wert. "Ähnlich" beschreibt bevorzugt Größen die "ungefähr gleich" sind. "Teilweise" beschreibt bevorzugt zu mindestens 5 %, besonders bevorzugt zu mindestens 10 %, und insbesondere zu mindestens 20 %, in einigen Fällen zu mindestens 40 %.

In einer bevorzugten Ausführungsform findet die thermische Behandlung in Erwärmungsanlagen statt. Zur Entfernung des Templats kann beispielsweise ein Rohrofen im Luftstrom oder Muffelofen verwendet werden. Derartige Öfen weisen eine gleichmäßige Temperaturverteilung auf, sodass die Wiederholbarkeit des Verfahrens vorteilhaft gegeben ist. Ferner kann die Abwärme der Öfen vorteilhaft für weitere Verfahrensschritte (z.B. Trocknung) verwendet werden, um damit einhergehend Energie zu sparen.

In einer weiteren bevorzugten Ausführungsform kann die thermische Behandlung auch - anstelle einer Erwärmung durch einen Ofen - mit weiteren folgenden Verfahren erfolgen. Bevorzugt wird das Katalysatorvorstufen umfassenden Glas-Keramik-Substrat über Rapid Thermal Annealing (RTA) mit der Abwärme einer Halogenlampe thermisch behandelt. Weiterhin bevorzugt wird das Katalysatorvorstufen umfassenden Glas-Keramik-Substrat über ein Flash-Lamp Annealing erwärmt. Dies führt vorteilhaft zu einer schnellen Aufheizung und einer ausschließlichen Erhitzung der Oberfläche. Darüber hinaus ist das Verfahren Laser Annealing ebenso bevorzugt. Dieses Verfahren führt zu einer noch schnelleren Erwärmung des Katalysatorvorstufen umfassenden Glas-Keramik-Substrats, wobei eine sehr geringe Eindringtiefe erreicht wird und ausschließlich die Oberfläche erhitzt wird. Möglich wäre die Erhitzung eines geeigneten Substrates mit einem Induktionsofen. Auch dies führt zu einer sehr schnellen Erhitzung.

In einer bevorzugten Ausführungsform ist das Verfahren dadurch gekennzeichnet, dass die Temperatur T₁ in einem Bereich zwischen 18°C -120°C liegt. Das Trocknen der Schicht auf dem dreidimensionale Metall-Substrat kann im Temperaturbereich von der Raumtemperatur bis 80°C stattfinden. Dadurch wird vorteilhaft nur sehr wenig Energie aufgebracht. Zudem reicht für derartige Temperaturen die Abwärme der Erwärmungsanlagen als Trocknungsenergie um ein schnelles Trocknen des Suspensionsfilms zu erhalten. Dies führt darüber hinaus zu großen wirtschaftlichen Ersparnissen des Verfahrens.

In einer bevorzugten Ausführungsform ist das Verfahren dadurch gekennzeichnet, dass die Suspension ein oder mehrere amphiphile Block-Copolymere umfasst.

Für die Templatierung von geordnet mesoporösen Katalysatorschichten werden bevorzugt amphiphilen Blockcopolymere verwendet, die einen hydrophilen Polyethylenoxidblock (PEO) aufweisen

Bevorzugte Template für die Synthese von geordnet mesoporösen Feststoffen sind amphiphile Moleküle. Diese bilden vorteilhaft durch Selbstorganisation Mizellen aus und ordnen sich zu flüssigkristallinen Phasen. Diese Flüssigkristalle, mit einer Nanostrukturierung von typischerweise 2 nm bis 50 nm, dienen bevorzugt als Endotemplate bei der Synthese von mesoporösen Oxiden.

In einer weiteren bevorzugten Ausführungsform wird das Katalysatorvorstufen umfassenden dreidimensional strukturierte Metallsubstrats in einer inerten Atmosphäre thermisch behandelt. Die Block-Copolymer-Substrate zersetzen sich nämlich auch in inerten Atmosphären bei Temperaturen oberhalb von 350°C.

In einer bevorzugten Ausführungsform ist das Verfahren dadurch gekennzeichnet, dass das amphiphile Block-Copolymer ausgewählt ist aus der Gruppe bestehend aus AB-Block Copolymeren (Polyethylenoxid-block-polystyrene (PEO-PS), Polyethylenoxid-block-polymethylmethacrylat (PEO-PMMA), Poly-2-venlypyridin-block-polyallylmethacrylat (P2VP-PAMA), Polybutadien-bock-polyethyleneoxid (PB-PEO), Polyisopren-bock-polydimethylaminoethylmetacrlyt (PI-PDMAEMA), Polybutadien-bock-polydimethylaminoethylmetacrlyt (PB-PDMAEMA), Polyethylen-block-polyethylenoxid (PE-PEO), Polyisobutylen-block-po-lyethylenoxid (PIB-PEO) und Poly(ethylen-co-buty-len)-block-poly(ethylenoxid) (PEB-PEO), Polystyrol-block-poly(4-vinylpyridin) (PS-P4VP), Polyisopren-block-polyethyleneoxid (PI-PEO), Polydimethoxyanilin-block-polystyrol (PDMA-PS), Polyethylenoxid-block-poly-n-utylacrylat (PEO-PBA), Polybutadien-bock- poly(2-vinylpyridin (PB-P2VP)), Polyethylenoxid-block-polylactid (PEO-PLA), Polyethylenoxid-block-polyglycolid (PEO-PLGA), Polyethylenoxid-block-polycaprolacton (PEO-PCL), Polyethylen-block-polyethylenglycol (PE-PEO), Polystyrol-block-polymethylmethacrlyt (PS-PMMA), Polystyrol-block-polyacrylsäure (PS-PAA), polypyrrol-block-polycaprolacton (PPy-PCL), Polysilicon-block-polyetylenoxid (PDMS-PEO), ABA-Block Copolymeren (Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-block-polyisobutylen-block-polyethylenoxid (PEO-PIB-PEO), Polyethylenoxid-block-polybutadien-block-polyethylenoxid (PEO-PB-PEO)), Polylactid-block-polyethylenoxid-block-polylactidd (PLA-PEO-PLA), Polyglycolid-block-polyethylenoxid-block-polyglycolid (PGLA-PEO-PGLA), Polylactid-cocaprolacton-block-polyethylenoxid-block-polylactid-co-caprolacton (PLCL-PEO-PLCL), Polycaprolacton-blockpolytetrahydrofuran-blockpolycaprolacton (PCL-PTHF-PCL), Polypropylenoxid-block-Polyethylenoxid-block-polypropylenoxid (PPG-PEO-PPG), Polystyrol-block-polybutadien-block-polystyrol (PS-PB-PS), Polystyrol-blockpolyethylen-ran-butylen-block-polystyrol (PS-PEB-PS), Polystyrol-block-polyisopren-block-polystyrol (PS-PI-PS), ABC-Block Coplymeren (Polyisopren-block-polystyrol-block-polyethyleneoxid (PI-PS-PEO), Polystyrol-block-Polyvinylpyrrolidon-block-polyethyleneoxid (PS-PVP-PEO), Polystyrol-block-poly-2-venylpyridin-block-polyethylenoxid (PS-P2VP-PEO), Polystyrol-block-poly-2-venylpyridin-block-polyethylenoxid (PS-P2VP-PEO), Polystyrol-block-polyacrylsäure-polyethylenoxid (PS-PAA-PEO)), Polyethylenoxid-block-polylactid-block-decan (PEO-PLA-decan), sowie anderen amphiphilen Polymeren (Polyethylenoxid-alkylether (PEO-Cₓₓ), z.B. Brij35, Brij56, Brij58) oder Gemischen dieser, vorzugsweise PEO-PB, PEO-PPO, PEO-PB-PEO, PEO-PPO-PEO.

In einer bevorzugten Ausführungsform ist das Verfahren dadurch gekennzeichnet, dass als Metall-Präkursor ein Metallsalz oder mehrere Metallsalze jeweils unterschiedlicher Metalle, oder deren Hydrate, eingesetzt werden.

In weiteren bevorzugten Ausführungsformen können auch Metallnanopartikel als Metall-Präkursor eingesetzt werden, die mit Hilfe von Polymertemplaten mesoporöstemplatiert als Schicht abgeschieden werden können. Metallnanopartikel sind vorteilhaft ggf. als Abfallprodukte aus der Industrie zu erhalten und demnach in einem Recycle-Prozess wieder zu verwerten.

In einer bevorzugten Ausführungsform ist das Verfahren dadurch gekennzeichnet, dass die Metallsalze ausgewählt sind aus der Gruppe bestehend aus Metallnitrat, Metallhalogenid, Metallsulfat, Metallacetat, Metallcitrat, Metallalkoxid oder deren Gemischen.

In alternativen Ausführungsformen sind auch weitere Salze einsetzbar sofern sie im geeigneten Lösungsmittel, ggf. unter Zugabe weiterer komplexierender Stoffe, löslich sind.

In einer bevorzugten Ausführungsform ist das Verfahren dadurch gekennzeichnet, dass die im Metall-Präkursor enthaltenen Metalle ausgewählt sind aus der Gruppe bestehend aus Alkalimetallen, vorzugsweise Lithium, Natrium, Kalium, Rubidium, Cäsium, Erdalkalimetallen, vorzugsweise Magnesium, Calcium, Strontium, Barium, Metallen der dritten Hauptgruppe des Periodensystems, vorzugsweise Bor, Aluminium, Indium, Gallium, Thallium, Metallen der vierten Hauptgruppe des Periodensystems, vorzugsweise Zinn, Silicium, Germanium, Blei, Metallen der fünften Hauptgruppe des Periodensystems, vorzugsweise Bismut, und Übergangsmetallen, vorzugsweise Iridium, Ruthenium, Cobalt, Zink, Kupfer, Mangan, Cadmium, Vanadium, Yttrium, Zirkonium, Scandium, Titan.

In einer bevorzugten Ausgestaltung ist das Verfahren dadurch gekennzeichnet, dass Ruthenium und/oder Iridium und/oder Titan als Metall-Präkursor verwandet werden. Insbesondere die Kombination der Metalle führt zu einer Katalysatorschicht, welche eine hohe Integrität und Stabilität aufweist. Ruthenium und Iridium-basierte Schichten zeigen in den Anwendungen Sauerstoffevolution und Chlorevolution eine hohe Aktivität. Auch verbessert die Anwesenheit von Titanoxid in der Schicht die Haftung auf dem Titansubstrat.

In einer bevorzugten Ausführungsform ist das Verfahren dadurch gekennzeichnet, dass mesoporöse Ru- und Ir-haltige Katalysatorschichten auf dreidimensional strukturierte Ti-Substrate mit unterschiedlicher Geometrie synthetisiert werden.

In einer bevorzugten Ausführungsform ist das Verfahren dadurch gekennzeichnet, dass als Lösungsmittel Wasser oder ein C1-C4-Alkohol, C2-C4-Ester, C2-C4-Ether, Formamid, Acetonitril, Aceton, Tetrahydrofuran, Benzyl, Toluol, Dimethylsulfoxid, Dichlormethan, Chloroform oder deren Mischungen eingesetzt werden, vorzugsweise Methanol, Ethanol, Formamid und/oder Tetrahydrofuran.

Die Vorteile und bevorzugten Ausführungsformen des erfindungsmäßen Verfahrens sind analog auf die erfindungsgemäße Elektrode, sowie die erfindungsgemäßen elektrochemischen Zellen zu übertragen und umgekehrt.

In einer bevorzugten Ausführungsform betrifft die Erfindung eine Elektrode für eine elektrochemische Zelle, bevorzugt hergestellt nach dem oben erwähnten Verfahren, dadurch gekennzeichnet, dass die Elektrode ein dreidimensional strukturiertes Metallsubstrat ist und eine nanostrukturierte mesoporöse Katalysatorschicht umfasst.

In elektrochemischen Zellen ist es üblich - insbesondere bei der Wasserspaltung im Vollzellmaßstab -, dass Katalysatoren in Form von dispergierten Pulvern zusammen mit einem Binder auf eine Nafion-Membran gesprüht und im Anschluss in die elektrochemischen Zellen, bevorzugt Elektrolyseur, eingebaut werden. Es waren daher umfangreiche (erfinderische) Überlegungen erforderlich, die dazu führten ein dreidimensional strukturierte Elektrode mit einer nanostrukturierten mesoporösen Katalysatorschicht statt Katalysatorpulvern in eine elektrochemische Zelle einzubringen.

Eine Elektrode umfassend eine nanostrukturierte mesoporöse Katalysatorschicht führt zu wesentlichen Vorteilen. So ist die höhere Massenaktivität der Spezies einer mesoporösen Katalysatorschicht nachgewiesen worden (vgl. auch Fig. 4).

Eine derartige Elektrode ist darüber hinaus vorteilhaft, weil diese durch die poröse oder offenporige Ausführung eine besonders große spezifische Oberfläche pro Bauteilvolumen aufweist und zusätzlich eine hohe mechanische Stabilität aufweist, die die gesamte elektrochemischen Zelle stabilisiert.

Insbesondere eine nanostrukturierte mesoporöse Katalysatorschicht ist mit wesentlichen Vorteilen verbunden. Es hat sich gezeigt, dass im Halbzellenmaßstab mesoporös templatierte Katalysatorschichten eine deutlich höhere Massenaktivität der elektrochemisch aktiven Spezies aufweisen als vergleichbare herkömmliche Katalysatorschichten, die bspw. über eine Ink-basierte Methode hergestellt wurden.

In einer weiteren bevorzugten Ausführungsform ist die Elektrode dadurch gekennzeichnet, dass das dreidimensional strukturiertes Metallsubstrat als ein Netz, Schaum, Gitter, Gewebe und/oder Geflecht ausgestaltet ist.

In einer weiteren bevorzugten Ausführungsform betrifft die Erfindung eine elektrochemische Zelle umfassend einen binderfreien Katalysator.

In einer bevorzugten Ausführungsform umfasst die elektrochemische Zelle eine Elektrode nach der oben genannten Art. Vorteil der erfindungsgemäßen Elektrode ist insbesondere das Aufweisen eines binderfreie Katalysator homogene Porenstruktur. Dies führt zu einem optimaler Stofftransport von Edukten und Produkten und entsprechen zu einer höheren katalytischen Aktivität.

Bevorzugt ist eine elektrochemische Zelle ausgesucht aus der Gruppe umfassend: Batterie, Akkumulator, Brennstoffzelle, Elektrolyseur.

Die Anwendung einer erfindungsgemäßen Elektrode ist weiterhin bevorzugt im Zusammenhang mit der Chloralkalielektrolyse oder HCl-Elektrolyse möglich. Weiterhin können dreidimensional strukturierte Substrate in der Medizintechnik eingesetzt werden, wobei essentiell für derartige Substrate ist, dass diese die erhöhten Temperaturen der thermischen Behandlung standhalten. Mesoporöse Materialien können dabei als Wirkstoffträger verwendet werden. Makromoleküle werden im porösen System gespeichert und können über einen längeren Zeitraum verteilt als Wirkstoff an geeigneter Stelle abgegeben werden. Hier ist die gezielte Einstellbarkeit der Porosität und des Materials ein wichtiger Vorteil.

### FIGUREN

Im Folgenden soll die Erfindung an Hand von Figuren näher erläutert werden, ohne auf diese beschränkt zu sein.

### Kurzbeschreibung der Abbildungen

- **Fig. 1**: Schematische Ablaufdarstellung eines bevorzugten Verfahrens zur Herstellung einer katalysatorbeschichteten dreidimensional strukturierten Elektrode
- **Fig. 2**: REM-Darstellung in Gegenüberstellung von Titannetzen vor (A) und nach (B) einer Beschichtung mit mesoporösen Iridiumoxidschichten
- **Fig. 3**: Schematische Ablaufdarstellung eines bevorzugten Verfahrens zur Herstellung einer katalysatorbeschichteten dreidimensional strukturierten Elektrode in Gegenüberstellung mit einem Verfahren aus dem Stand der Technik
- **Fig. 4**: Darstellung in einem Diagramm der elektrokatalytische Aktivität als cyclovoltametrische (CV) Messung von zwei Katalysatorsystemen in einem Wasserelektrolyseur
- **Fig. 5**: Darstellung in einem Diagramm für eine erhöhte katalytische Aktivität von Netzen mit mesoporös templatierte Schichten in der Chlorherstellung

### Detaillierte Beschreibung der Abbildungen

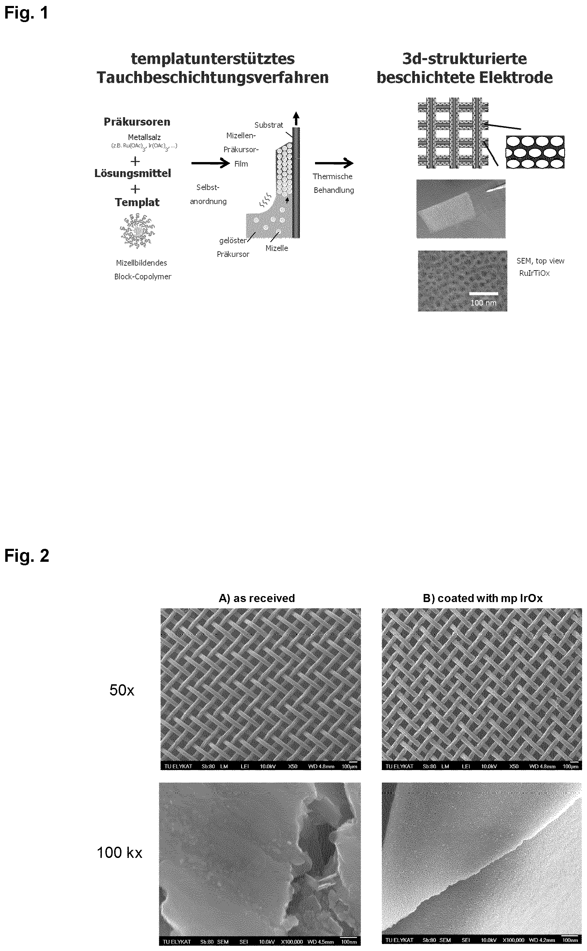

**Fig. 1** illustriert schematisch den Ablauf eines bevorzugten Verfahrens zur Herstellung einer katalysatorbeschichteten dreidimensional strukturierten Elektrode. Das Verfahren umfasst bevorzugt ein templatunterstütztes Tauchbeschichtungsverfahren. Hierbei wird insbesondere in einem ersten Verfahrensschritt eine Suspension erzeugt. Die Suspension umfasst Präkursoren Lösungsmittel und ein Templat. Stark bevorzugt wird ein Metallsalz - bspw. Ru(OAc)₃ oder Ir(OAc)₃ - als Präkursor verwendet. Als Templat wird bevorzugt ein Mizellen bildendes Block-Copolymer verwendet. Nach der Herstellung der Suspension wird eine dreidimensional strukturierten Elektrode in die Suspension getaucht, sodass sich beim Herausziehen der Elektrode ein Suspensionsfilm auf der Oberfläche ausbilden kann. Das Lösungsmittel verdampft bevorzugt schon bei Raumtemperatur, sodass die Elektrode schon nach kurzer Zeit eine Katalysatorvorstufe mit integrierten Mizellen auf Ihrer Oberfläche aufweist. Ausgehend von der Selbstanordnung der Mizellen bildet sich eine geordnete Nanostruktur auf der Oberfläche der dreidimensional strukturierten Elektrode. In einer abschließenden thermischen Behandlung wird die Katalysatorvorstufe in eine Katalysatorschicht überführt. Die thermische Behandlung führt zu einer Verbrennung des Mizellen bildenden Templats, sodass eine nanostrukturierte mesoporöse Katalysatorschicht entsteht. Die REM-Aufnahme zeigt einen mesoporös templatierten bei 450 °C kalzinierten RuIrTiOₓ Schicht auf einem Titannetz in Draufsicht.

**Fig. 2** ist die Darstellung von REM-Aufnahmen von Titannetzten, die bevorzugt als Gasdiffusionsschichten eingesetzt werden können. Insbesondere zeigt die Aufnahme ein Titantnetz vor (A) und nach (B) einer Beschichtung mit mesoporösen Iridiumoxidschichten. Die oberhalb angeordneten Darstellungen zeigen die Netze bei 50-facher Vergrößerung. Die unterhalb angeordneten Darstellungen zeigen hingegen die Netze bei 100.000-facher Vergrößerung. Die Beschichtung wurde bei 400 °C in Luft kalziniert.

**Fig. 3** zeigt eine schematische Ablaufdarstellung eines bevorzugten Verfahrens zur Herstellung einer katalysatorbeschichteten dreidimensional strukturierten Elektrode in Gegenüberstellung mit einem Verfahren aus dem Stand der Technik. Im Stand der Technik wird ein Ink hergestellt. Eine Dispersion umfassend bevorzugt Isopropanol ('PrOH), Nafion, Wasser und ein Katalysatorpulver werden mittels Ultraschall zu einem Ink gemischt wird. Anschließend wird ein Substrat, wie zum Beispiel eine Nafionmembran, mit dem Ink beschichtet. Bevorzugt wird das Substrat über Sprühen beschichtet. In einem letzten Schritt wird die Membran in den Vollzellmaßstab eingebracht.

Das erfindungsgemäße Verfahren nutzt hingegen bevorzugt eine Tauchbeschichtung. Zunächst wird eine Suspension generiert, welche zum Beispiel Ethanol, ein Mizellen bildendes Templat und ein Edelmetallsalz, nämlich Ir(OAc)₃ umfasst. Anschließend wird ein dreidimensionales Substrat in ein Behältnis mit der beschrieben Suspension eingetaucht. Das Herausziehen des dreidimensionalen Substrates aus der Suspension führt zu einer auf dem Substrat aufweisenden Schicht einer Katalysatorvortufe. Anhand einer thermischen Behandlung wird im folgend eine Katalysatorschicht gebildet und in einem letzten Verfahrenschritt wird das dreidimensionale Substrat in einen Vollzellenmaßstab eingebracht.

**Fig. 4** zeigt die elektrokatalytische Aktivität einer mit mesoporösen Iridiumoxid beschichteten CCG (catalyst coated gas diffusion layer) als Anode in Kontakt mit einer Membran. Die Membran ist auf der Kathodenseite mit gängigem Pt/C Katalysator beschichtet (einseitig beschichtete CCM). Verglichen wird das Setup mit einer kommerziell verfügbaren CCM (catalyst-coated membrane) mit dem gleichen Pt/C Katalysator auf der Kathodenseite und einer binderhaltigen Ir-Schicht (beidseitig beschichtete CCM) als Referenzsystem. Das CCG-System erreicht eine etwa doppelt so hohe geometrische Stromdichte im Vergleich zur binderhaltigen kommerziellen Referenz.

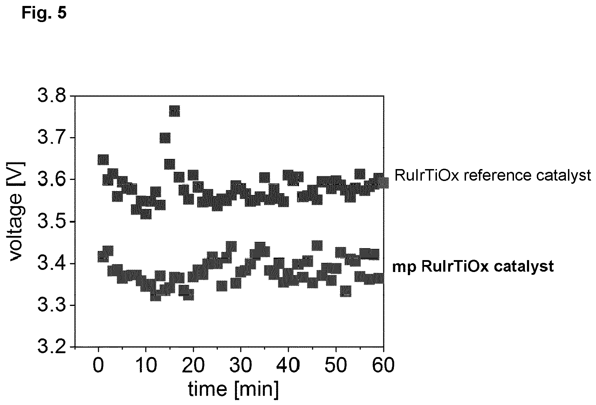

Die in **Fig. 5** illustrierte Punktdiagramm-Darstellung zeigt eine erhöhte katalytische Aktivität von dreidimensional strukturierten Elektroden mit mesoporös templatierte Katalysatorschichten in der Chlorherstellung. Hierbei wurde zum Vergleich ein Referenzkatalysator angewendet, wobei eine dreidimensional strukturierten Elektrode mit einem herkömmlichen Syntheseverfahren beschichtet wurde und daher keine mesoporöse Katalysatorschicht umfasst.

Folgende Randbedingungen wurden für den Vergleich herangezogen: 80°C; NaCl (300 g/l) an der Anode; NaOH (400 g/l) an der Kathode; chronopotentiometrische Messungen bei 350 mA/cm²; Kathode: kommerzieller Katalysator auf Ni-Netz; Membran: N982WX; Anode: Katalysatorbeschichtung auf Ti-Netz

## Patentansprüche

1. Verfahren zur Herstellung einer katalysatorbeschichteten dreidimensional strukturierten Elektrode
umfassend die nachfolgenden Schritte:
a) Bereitstellung eines dreidimensional strukturierten Metallsubstrats;
b) Herstellung einer Suspension umfassend ein Templat, einen Metall-Präkursor und ein Lösungsmittel;
c) Auftragen der Suspension auf das dreidimensional strukturierte Metallsubstrat, sodass sich ein Suspensionsfilm auf dem dreidimensional strukturierte Metallsubstrat bildet;
d) Trocknen des Suspensionsfilms auf dem dreidimensional strukturierten Metallsubstrat bei einer Temperatur T₁, sodass das Lösungsmittel innerhalb des Suspensionsfilms verdampft und eine Schicht einer Katalysatorvorstufe mit integrierten Templatstrukturen erhalten wird;
e) thermische Behandlung des Katalysatorvorstufen umfassenden dreidimensional strukturierte Metallsubstrats bei einer zweiten Temperatur T₂, und einer Kalzinierzeit t₂, sodass eine mesoporöse Katalysatorschicht entsteht.

2. Verfahren nach Anspruch 1
**dadurch gekennzeichnet, dass**
das Auftragen der Suspension aus Schritt (c) anhand einer Tauchbeschichtung erfolgt.

3. Verfahren nach einem oder mehreren der vorhergehenden Ansprüche
**dadurch gekennzeichnet, dass**
das dreidimensional strukturierte Metallsubstrat als ein Netz, Schaum, Gitter, Sieb, Gewebe und/oder Geflecht ausgestaltet ist.

4. Verfahren nach einem oder mehreren der vorhergehenden Ansprüche
**dadurch gekennzeichnet, dass**
die Temperatur T₂ in einem Bereich liegt zwischen 200°C und 1000°C, bevorzugt zwischen 300°C und 800°C, und die Kalzinierzeit t₂ in einem Bereich liegt zwischen 1 Minute und 1440 Minuten, insbesondere zwischen 10 bis 60 Minuten.

5. Verfahren nach einem oder mehreren der vorhergehenden Ansprüche
**dadurch gekennzeichnet, dass**
die Temperatur T₁ in einem Bereich zwischen 18°C -120°C liegt.

6. Verfahren nach einem oder mehreren der vorhergehenden Ansprüche
**dadurch gekennzeichnet, dass**
die Suspension ein oder mehrere amphiphile Block-Copolymere umfasst.

7. Verfahren nach Anspruch 6
**dadurch gekennzeichnet, dass**
das amphiphile Block-Copolymer ausgewählt ist aus der Gruppe bestehend aus
AB-Block Copolymeren (Polyethylenoxid-block-polystyrene (PEO-PS), Polyethylenoxid-block-polymethylmethacrylat (PEO-PMMA), Poly-2-venlypyridin-block-polyallylmethacrylat (P2VP-PAMA), Polybutadien-bock-polyethyleneoxid (PB-PEO), Polyisopren-bock-polydimethylaminoethylmetacrlyt (PI-PDMAEMA), Polybutadien-bock-polydimethylaminoethylmetacrlyt (PB-PDMAEMA), Polyethylen-block-polyethylenoxid (PE-PEO), Polyisobutylen-block-po-lyethylenoxid (PIB-PEO) und Poly(ethylen-co-buty-len)-block-poly(ethylenoxid) (PEB-PEO), Polystyrol-block-poly(4-vinylpyridin) (PS-P4VP), Polyisopren-block-polyethyleneoxid (PI-PEO), Polydimethoxyanilin-block-polystyrol (PDMA-PS), Polyethylenoxid-block-poly-n-utylacrylat (PEO-PBA), Polybutadien-bock- poly(2-vinylpyridin (PB-P2VP)), Polyethylenoxid-block-polylactid (PEO-PLA), Polyethylenoxid-block-polyglycolid (PEO-PLGA), Polyethylenoxid-block-polycaprolacton (PEO-PCL), Polyethylen-block-polyethylenglycol (PE-PEO), Polystyrol-block-polymethylmethacrlyt (PS-PMMA), Polystyrol-block-polyacrylsäure (PS-PAA), polypyrrol-block-polycaprolacton (PPy-PCL), Polysilicon-block-polyetylenoxid (PDMS-PEO),
ABA-Block Copolymeren (Polyethylenoxid-block-polybutadien-block-polyethylenoxid (PEO-PB-PEO), Polyethylenoxid-block-polypropylenoxid-block-polyethylenoxid (PEO-PPO-PEO), Polypropylenoxid-block-polyethylenoxid-block-polypropylenoxid (PPO-PEO-PPO), Polyethylenoxid-block-polyisobutylen-block-polyethylenoxid (PEO-PIB-PEO), Polyethylenoxid-block-polybutadien-block-polyethylenoxid (PEO-PB-PEO)), Polylactid-block-polyethylenoxid-block-polylactidd (PLA-PEO-PLA),
Polyglycolid-block-polyethylenoxid-block-polyglycolid (PGLA-PEO-PGLA), Polylactid-co-caprolacton-block-polyethylenoxid-block-polylactid-cocaprolacton (PLCL-PEO-PLCL), Polycaprolacton-blockpolytetrahydrofuran-blockpolycaprolacton (PCL-PTHF-PCL), Polypropylenoxid-block-Polyethylenoxid-block-polypropylenoxid (PPG-PEO-PPG), Polystyrol-block-polybutadien-block-polystyrol (PS-PB-PS), Polystyrol-block-polyethylen-ranbutylen-block-polystyrol (PS-PEB-PS), Polystyrol-block-polyisopren-block-polystyrol (PS-PI-PS),
ABC-Block Coplymeren (Polyisopren-block-polystyrol-block-polyethyleneoxid (PI-PS-PEO), Polystyrol-block-Polyvinylpyrrolidon-block- polyethyleneoxid (PS-PVP-PEO), Polystyrol-block-poly-2-venylpyridin-block-polyethylenoxid (PS-P2VP-PEO), Polystyrol-block-poly-2-venylpyridin-block-polyethylenoxid (PS-P2VP-PEO), Polystyrol-block-polyacrylsäure-polyethylenoxid (PS-PAA-PEO)), Polyethylenoxid-block-polylactid-block-decan (PEO-PLA-decan),
sowie anderen amphiphilen Polymeren (Polyethylenoxid-alkylether (PEO-Cₓₓ), z.B. Brij35, Brij56, Brij58)
oder Gemischen dieser,
vorzugsweise PEO-PB, PEO-PPO, PEO-PB-PEO, PEO-PPO-PEO.

8. Verfahren nach einem oder mehreren der vorhergehenden Ansprüche
**dadurch gekennzeichnet, dass**
als Metall-Präkursor ein Metallsalz oder mehrere Metallsalze jeweils unterschiedlicher Metalle, oder deren Hydrate, eingesetzt werden.

9. Verfahren nach Anspruch 8
**dadurch gekennzeichnet, dass**
die Metallsalze ausgewählt sind aus der Gruppe bestehend aus Metallnitrat, Metallhalogenid, Metallsulfat, Metallacetat, Metallcitrat, Metallalkoxid oder deren Gemischen.

10. Verfahren nach einem oder mehreren der vorhergehenden Ansprüche
**dadurch gekennzeichnet, dass**
die im Metall-Präkursor enthaltenen Metalle ausgewählt sind aus der Gruppe bestehend aus Alkalimetallen, vorzugsweise Lithium, Natrium, Kalium, Rubidium, Cäsium, Erdalkalimetallen, vorzugsweise Magnesium, Calcium, Strontium, Barium, Metallen der dritten Hauptgruppe des Periodensystems, vorzugsweise Bor, Aluminium, Indium, Gallium, Thallium, Metallen der vierten Hauptgruppe des Periodensystems, vorzugsweise Zinn, Silicium, Germanium, Blei, Metallen der fünften Hauptgruppe des Periodensystems, vorzugsweise Bismut, und Übergangsmetallen, vorzugsweise Iridium, Ruthenium, Cobalt, Zink, Kupfer, Mangan, Cadmium, Vanadium, Yttrium, Zirkonium, Scandium, Titan.

11. Verfahren nach einem oder mehreren der vorhergehenden Ansprüche
**dadurch gekennzeichnet, dass**
als Lösungsmittel Wasser oder ein C1-C4-Alkohol, C2-C4-Ester, C2-C4-Ether, Formamid, Acetonitril, Aceton, Tetrahydrofuran, Benzyl, Toluol, Dimethylsulfoxid, Dichlormethan, Chloroform oder deren Mischungen eingesetzt werden, vorzugsweise Methanol, Ethanol, Formamid und/oder Tetrahydrofuran.

12. Elektrode für eine für eine elektrochemische Zelle, bevorzugt hergestellt durch ein Verfahren nach einem oder mehreren der vorhergehenden Ansprüche,
**dadurch gekennzeichnet, dass**
die Elektrode ein dreidimensional strukturiertes Metallsubstrat ist und eine nanostrukturierte mesoporöse Katalysatorschicht umfasst.

13. Elektrode gemäß Anspruch 12
**dadurch gekennzeichnet, dass**
das dreidimensional strukturierte Metallsubstrat als ein Netz, Schaum, Gitter, Gewebe und/oder Geflecht ausgestaltet ist.

14. Elektrochemische Zelle umfassend eine Elektrode nach den Ansprüchen 12 und/oder 13
